# EUROPEAN PATENT SPECIFICATION

(11) **EP 2 348 896 B1**
(45) Date of publication and mention of the grant of the patent: **14.11.2012**
(21) Application number: 09751833.6
(22) Date of filing: 12.10.2009
(51) Int. Cl.: A23N 4/04, A23N 4/22, B07C 5/34, G01N 33/02

(54) **METHOD FOR ASSIGNING A STONEFRUIT TO A PREDETERMINED CLASS AND A DEVICE THEREFOR**
VORRICHTUNG ZUM ZUWEISEN EINER STEINFRUCHT ZU EINER VORBESTIMMTEN KLASSEN UND VORRICHTUNG DAFÜR
PROCÉDÉ POUR ASSIGNER UN FRUIT À NOYAU À UNE CLASSE PRÉDÉTERMINÉE ET DISPOSITIF À CET EFFET

(30) Priority: 10.10.2008 BE 200800561
(43) Date of publication of application: 03.08.2011
(73) Proprietor: Belgian Electronic Sorting Technology, 3001 Heverlee (BE)
(72) Inventor: FIVEZ, Christiaan, B-3012 Wilsele (BE)
(74) Representative: Duyver, Jurgen Martha Herman
(86) International application number: PCT/EP2009/063293
(87) International publication number: WO 2010/040857

(56) References cited:
- DE-A- 2 538 799
- US-A- 2 532 644
- US-A- 3 005 550
- US-A- 4 213 382
- US-B1- 6 214 398

## Description

The current invention relates to a method for assigning a stonefruit to a predetermined class as described in the preamble of the first claim and a device therefor.

When processing for example peaches, or other stonefruits such as for example prunes, apricots, etc., the peaches are often cut in two half parts after which the pit is removed from the parts. However, it for example often occurs that small splinters of the pit remain in the flesh part of the peach. These splinters are however undesired since they can hurt a consumer of the half pitted peach when eating the peach. A method in which a peach is cut in two parts after which the pit is removed from the fruit is for example known from US3552464.

In a solution known from the state of the art, a thin layer of the flesh surrounding the pit is cut away. Since the splinters are mainly situated in this layer, a large part of the splinters are this way removed from the fruit. However, in such a method a part of the flesh is also lost. Moreover, the typical natural look of the flesh surrounding the pit of a pitted stonefruit is lost. In a peach, this is for example the structure caused by the pit.

It is for example known that the splinters present in the flesh can be caused by splitting of the pit in the fruit. This would explain the presence of splinters in fruits for about 80%. The percentage of fruits in which a split pit is present, can mount to 30% or even more. The splitting of the pit in the flesh can for example occur under the influence of a rotting process or a growth process of the fruit. In such cases the fruit splits along a length of the seam of the pit such that a slit is created having a width at the seam of the pit of usually more than 3mm. Splitting of the pit of the fruit is for example known from US3552464, describing a method for cutting a peach in which the orientation of the seam is taken into account to avoid splitting of the pit.

The inventor realized that when the presence of such split pits can be determined, the risk for splinters in the fruits can be substantially lowered when the fruits having a split pit are separated from the other fruits, for example, before pitting the peaches.

It is however undesirable that this is done by cutting open the fruits.

Therefore, it is an aim of the present invention to provide a method allowing to detect split pits without having to cut open the stonefruits.

The inventor realized that the presence of a split pit can be determined using high-energy radiation in which the stonefruits, for example peaches, are assigned to two classes: a class for the fruits having a split pit and a second class for the fruits without split pit.

By splitting of the pit in the stonefruit a slit is created in the material of the pit. This slit in the material of the pit causes a variation of the density of the thickness of the material of the pit since less or even no material of the pit is left in it, however instead, for example, flesh or a gas with a different density than that of the material of the pit.

It has been already known for a long time to use the material penetrating properties of X-rays to visualize the inside of objects. Herein an object is exposed to X-rays and the radiation coming from the object is captured such that a contrast image is formed of the captured radiation. In the contrast image a pattern is created by areas with a different density of thickness in the object. Areas having an increased thickness or density will stop relatively more radiation than areas having a lower density or thickness, because of which the image shows a difference in contrast between the areas having a higher density or thickness and the areas having a lower density or thickness. The image therefore depends on the differences in the thickness or the density in the object. Information on the internal density or thickness of an object can therefore be gathered based on the image.

The pattern caused by the variation in thickness or in density in the contrast image can subsequently be used to assign the object to a certain class. Hereby, the different classes of the objects can be distinguished from each other on the basis of at least one feature of the pattern of the object to be evaluated. A correct recognition/evaluation of the at least one feature therefore makes it possible to assign the object to the correct class.

An example in which such a method is used is the well-known method to detect, for example, a fracture in the bone of an arm. Herein, an arm is exposed to X-rays and the radiation coming from the arm is captured on, for example, a photographic plate. Because of the large difference in density between the bone and the surrounding tissue a contrast image can be formed of the bone in the arm. Herein, also eventual fractures are visualized: the fracture itself can for example be recognized on the basis of a sudden local difference in contrast in the bone of the arm, i.e. the feature pattern for a bone fracture. A certified person can subsequently, on the basis of the image, evaluate whether a fracture is present the bone or not. Therefore, the arm is assigned to the class "broken" or "unbroken" on the basis of the feature "sudden local difference in contrast".

Such methods are for example also already used to evaluate which cherries from a large collection of cherries still contain a pit.

It is known that during automatic pitting of cherries using a pitting device, a number of cherries are not fully pitted and therefore leave the pitting device while still having a pit. Therefore, it is desirable to check the cherries leaving the pitting device on the presence of a pit and to remove cherries based on this evaluation from the remaining cherries.

It is already known that hereto the cherries are shaken onto a conveyor belt and are transported along a source of X-rays. The radiation going through the cherries is subsequently captured by a camera thereto provided which transmits the contrast images electronically to a processing unit which further processes the images. The processing unit is programmed such that it recognizes the features corresponding to the presence of absence of a pit in a cherry. When a cherry with a pit in it is recognized, the processing unit drives a device for automatically removing the cherry from the other cherries. This device can for example operate using air pressure, the cherry being blown from the transport direction of the cherries recognized as being pitted. see also document DE-A-2 5388799.

The features which define a pitted cherry are however easy to implement since a pit has a substantially different density than the flesh of the cherry which is situated around the pit. This large difference in density causes large differences in contrast between the contrast image of the cherry with pit and a cherry without pit which is eventually captured, simplifying the implementation of the features.

Moreover, a pit is always centrally located in the cherry and the cherry and the pit have a substantial spherical shape. As a consequence the contrast image of the pit, notwithstanding the orientation of the cherry with respect of the source and the camera, will always be in the centre of the contrast image of the cherry. Therefore, during recognition of the absence or presence of the pit no account has to be taken with a contrast image which depends on the orientation of the cherry.

A pit and a cherry have, despite difference in their dimensions, substantially a fixed shape. This form can also, during recognition of the presence or absence of the pit, be used and makes recognition and classification more easy.

The contrast image of the pit in the contrast image of the cherry is also well delimited with respect to the contrast image of the surrounding flesh.

The factors above made it relatively easy to define and implement a plurality of features which make it possible for a processing unit to detect the presence of pits in cherries and to drive a device based on the evaluation which moves cherries having a pit out off the transport direction of the other cherries.

The above-mentioned method however only allows to detect the presence of a pit in a stonefruit and does not allow to detect the presence of a slit, called a split pit, in a stonefruit.

Therefore, it is an object of the current invention to provide a method which allows to detect a split pit in a stonefruit such that a method is provided which allows to assign stonefruits in a certain class on the basis of the presence or absence of a split pit without having to cut the stonefruit open.

Thereto, the method according to the present invention as defined in claim 1 is characterized in that the feature corresponds to the presence or absence of a slit in a pit of the stonefruit.

The inventor has found that the presence of a split pit in the stonefruit surprisingly leads to a pattern in the contrast image of the stonefruit. The inventor moreover found that this pattern is also detectable on the basis of at least one feature using the processing unit.

It has been found by the inventor that the split in a pit absorbs less x-rays than the close surroundings of the split. Therefore, in the contrast image of the stonefruit, a pattern is caused by the presence of a split pit corresponding to a region in the contrast image corresponding to a local increase in detected x-rays surrounded by a region in the contrast image corresponding to less x-rays detected. In stonefruits not having a split pit, no such region is detected in the contrast image of the stonefruit. Therefore, by detecting the region in the contrast image corresponding to the increase in the detected x-ray caused by the split in the pit, split pits can be detected.

The inventor has found that detection of the region in the contrast image corresponding to the local increase in detected x-rays in the region in the contrast image corresponding to less x-rays detected, caused by the presence of a split in the pit can be done by selecting a circular zone in the contrast image of the stonefruit having a predetermined radius in which the occurrence of the split of the pit is expected, the centre of the zone being the position in the contrast image of the stonefruit defined as the average of the positions inside the image of the stonefruit weighed by the amount of x-rays absorbed at those positions represented by the contrast of the image at those locations, calculating the average contrast of the contrasts of the locations inside the zone and comparing the average contrast of the zone with a predetermined contrast value. For example, when locations being exposed to less x-rays are represented in the contrast image as being darker than locations being exposed to more x-rays, when the average contrast of the zone is brighter than the predetermined contrast value, the stonefruit is assigned as having a split pit and assigned to the corresponding class. When locations being exposed to less x-rays are represented in the contrast image as being brighter than locations being exposed to more x-rays stonefruits are assigned as having a split pit when the average contrast in the zone is darker than the predetermined contrast value.

The predetermined radius is preferably determined by selecting a number of stonefruits from which it is known that they have a split pit, for example by previous, for example, manual assessment of contrast images of some peaches, selecting a zone in the respective stonefruits in which the pattern caused by the presence of the split pit is present, measuring the radiuses of the selected zones, for example the average radius, measuring the radiuses, for example the average radiuses, of the image of the stonefruits in the contrast image, dividing the radiuses of the zones respectively by the radiuses of the stonefruits and determining the maximum of these divisions. This value is for example saved and fed to the processing unit. Subsequently, to calculate the radius of the zone of a stonefruit which needs to be assigned whether it contains a split pit or not, the radius, preferably the average radius of the contrast image of the stonefruit is multiplied by the maximum of the divisions. Therefore, for each different stonefruit which needs to be assigned to a class, the radius of the zone as well as the location of the zone can be different and depends on for example the radius of the image of the stonefruit in the contrast image.

The predetermined contrast value with which the average contrast value within the zone is compared to assign a particular stonefruit to a class can be determined statistically chosen and can for example be chosen in function of the risk that stonefruits without a split pit are falsely assigned to the class "split pits" or that stonefruits having a split pit are falsely assigned to the class "no split pits".

Hereby, the pattern of the image caused by the slit in the pit usually depends on the orientation of the pit, and therefore of the fruit, with respect to the source of the high-energy radiation. The shape and dimension of the source of high-energy radiation are moreover determining factors for the pattern of the image caused by the slit in the pit.

Using a good choice of the feature or the plurality of features of this pattern this pattern can be evaluated by the processing unit such that the fruits can be evaluated correctly such that they are eventually assigned to the correct classes.

The inventor has also found that when the orientation of the fruit with respect to the source of high-energy radiation is known, not only the evaluation of the fruits is simplified but also the risk that fruits are assigned to a wrong class decreases. The inventor has found that in the contrast image of the pit also a pattern is present, caused by the seed of the pit. This pattern caused by the seed of the pit can interfere with the pattern caused by the slit of the split pit because of which the risk for a wrong evaluation of a pattern observed in the contrast image can increase. By detecting the orientation of the fruit or orienting the fruit and therefore the pit with respect to the source of high-energy radiation, the pattern caused by the seed and the pattern caused by the slit of the split pit can be better separated from each other. This better distinguishing reduces the risk that the processing unit makes a wrong assignment of the fruit to the classes.

The fruit can for example be oriented mechanically with respect to the source of high-energy radiation or supplementary means can be provided which determine the orientation of the stonefruit with respect to the source of high-energyradiation. Preferably, the orientation of the fruit with respect to the source of high-energy radiation is however deduced from the contrast image of the fruit.

The inventor has further found that the determination of the orientation of the fruit with respect to the source of high-energy radiation can be further improved when the orientation of the fruit with respect to the source of high-energy radiation is kept substantially fixed during transport along the source of high-energy radiation. Because of the fixed orientation of the fruit during transport of the fruit along the source of the high-energy radiation, the inventor has found that the quality of the contrast images enhances, leading to a better evaluation of the fruit by the processing unit, and therefore a better assignment to the classes can be achieved. This can be achieved by for example transporting the fruit on a conveyor belt past the source of high-energy radiation, the conveyor belt having a predetermined structure which is adapted to the form and dimensions of the fruit.

Preferably, the fruit thereto is transported by a conveyor belt along the source of high-energy radiation, as explained above, more preferably a conveyor belt built up by several snares. Preferably, the distance between the snares and the orientation of the snares with respect to the transport direction of the conveyor belt is adapted to the fruits. This way the fruits can extend substantially in longitudinal or lateral direction of the conveyor belt. Preferably, the snares extend in the lateral direction of the conveyor belt since this allows an easy driving of the conveyor belt. Preferably the distance between the snares is adapted to the fruits such that the fruits can be wedged between the different snares. More preferably, the distance between the snares is adapted to the dimensions of the stonefruit, particularly peaches.

The orientation of the fruit can however also be determined by providing multiple high-energy sources and/or multiple cameras on different places with respect to the fruit and which therefore form a contrast image which depends on the orientation of the fruit with respect to the high-energy source and/or the camera. The orientation can be subsequently determined from these images.

The orientation of the fruit can however also be determined by other means. Visible light which is reflected by the fruit can for example be captured by a camera wherein the orientation of the fruit can be determined from the image formed by the reflected light.

After assigning the fruit to a certain class, the fruits in which a split pit was detected, and in which the risk for splinters to occur in the flesh is larger, are deviated to for example a further processing device which removes the pit from the flesh by also cutting away part of the flesh. When the fruit comprises no split pit, it can be subsequently transported to a different further processing device which for example removes the pit from the fruit without removing part of the flesh with it, as for example a further processing device as described in US3552464. The preselection on the basis of the evaluation of the processing unit hereby lowers the risk that splinters occur in the flesh of the fruit, in particular stonefruit, more in particular peaches.

Preferably, the method is provided to subsequently evaluate a plurality of fruits, for example when a large collection of fruits is provided to be assigned to classes.

The inventor has also found that by increasing the number of high-energy sources along which the fruit is transported and also preferably by increasing the number of cameras with which radiation which penetrates from the fruit can be captured, the accuracy of the measurement can also be increased because for example a variant of the contrast image can be obtained, the orientation of the fruit can be better determined, etc.

The processing unit is for example a preprogrammed computer which is provided to electronically receive the contrast image of the fruit after which the computer further processes these contrast images using for example software to an evaluation.

The contrast images of the fruit can be formed in any way known to the person skilled in the art. The camera can for example be provided in a known way of a CCD element of a CMOS, etc which is provided to transform high-energy radiation to electronic signals and to transmit the contrast image electronically to the processing unit. Hereto, a known CCD element can be provided in a known way with a known fluorescent layer which transforms incident high-energy electromagnetic radiation to radiation which is observable for the CCD element. The fluorescent layer is however not necessary and the CCD or CMOS can also be directly sensitive for high-energy radiation. The camera can for example be an inline arrangement of photodiodes.

The source can be every source known to the person skilled in the art which is appropriate to generate and emit high-energy radiation. Preferably, the source of high-energy electromagnetic radiation is a source which generates X-rays such as for example known industrial X-ray sources which are known to the person skilled in the art.

The inventor has found that X-rays have a large penetrating capacity in a wide range of materials and that they as a consequence are especially fit to be applied in the method according to the present invention. The invention is however not limited to the use of X-rays when applying the method and also other forms of high-energy electromagnetic radiation known to the person skilled in the art can be used.

The location of the source and the camera with respect to the fruit is not essential for the invention and can be determined by the person skilled in the art. Preferably, the distance between the source and the camera can however be adapted to the desired resolution in the contrast image. When this distance becomes too large, the person skilled in the art found that this has a negative effect on the resolution of the contrast image. The distance between the camera and the source is preferably also adapted to the dimensions of the fruit which needs to be evaluated.

Next to the method according to the present invention, the present invention also relates to a device arranged such as to perform the method according to the present invention.

## Claims

1. Method for assigning a stonefruit to a predetermined class, in which the stonefruit is transported along at least one source of high-energy electromagnetic radiation such that at least a part of the radiation penetrates through the stonefruit to at least one camera thereto provided and is there captured by the camera to form a contrast image using the captured radiation after which the contrast image is processed by a processing unit which is provided to evaluate a pattern in the contrast image caused by a variation in the density or thickness of a material of the stonefruit corresponding to at least one predetermined feature of the stonefruit and to assign, based on the evaluation of the feature, the stonefruit to a predetermined class, **characterised in that** the feature mainly corresponds to the presence or absence of a slit in a pit of the stonefruit.

2. Method according to claim 1, **characterised in that** the stonefruit is at least one of the following: peach, plum, apricot.

3. Method according to any one of the preceding claims, **characterised in that** the stonefruit has a predetermined orientation with respect to the source of high-energy radiation and/or that the orientation of the stonefruit with respect to the source of high-energy radiation is deterimined.

4. Method according to claim 3, **characterised in that** the orientation is determined from the contrast image by the processing unit.

5. A device arranged such as to perform the method according to any one of claims 1 - 4.

## Patentansprüche

1. Verfahren zum Zuordnen einer Steinfrucht zu einer vorbestimmten Klasse, wobei die Steinfrucht entlang mindestens einer Quelle hochenergetischer elektromagnetischer Strahlung transportiert wird, so dass mindestens ein Teil der Strahlung durch die Steinfrucht zu mindestens einer Kamera, die an dieser vorgesehen ist, dringt und dort von der Kamera erfasst wird, um ein Kontrastbild unter Verwendung der eingefangenen Strahlung zu bilden, wonach das Kontrastbild von einer Verarbeitungseinheit verarbeitet wird, die zum Auswerten eines Musters in dem Kontrastbild vorgesehen ist, das durch eine Variation in der Dichte oder Dicke eines Materials der Steinfrucht verursacht wird, die mindestens einem vorbestimmten Merkmal der Steinfrucht entspricht, sowie zum Zuordnen der Steinfrucht auf der Basis der Auswertung des Merkmals zu einer vorbestimmten Klasse, **dadurch gekennzeichnet, dass** das Merkmal vorwiegend dem Vorhandensein oder Fehlen eines Schlitzes in einem Kern der Steinfrucht entspricht.

2. Verfahren nach Anspruch 1, **dadurch gekennzeichnet, dass** die Steinfrucht mindestens eine der folgenden ist: Pfirsich, Pflaume, Aprikose.

3. Verfahren nach einem der vorangehenden Ansprüche, **dadurch gekennzeichnet, dass** die Steinfrucht eine vorbestimmte Orientierung in Bezug auf die Quelle der hochenergetischen Strahlung hat und/oder dass die Ausrichtung der Steinfrucht in Bezug auf die Quelle der hochenergetischen Strahlung bestimmt wird.

4. Verfahren nach Anspruch 3, **dadurch gekennzeichnet, dass** die Ausrichtung von der Verarbeitungseinheit aus dem Kontrastbild bestimmt wird.

5. Vorrichtung die zur Durchführung des Verfahrens nach einem der Ansprüche 1 bis 4 ausgelegt ist.

## Revendications

1. Procédé pour assigner un fruit à noyau à une classe prédéterminée, dans lequel le fruit à noyau est transporté le long d'au moins une source de rayonnement électromagnétique à haute énergie de telle manière qu'au moins une partie du rayonnement pénètre à travers le fruit à noyau jusqu'à au moins une caméra prévue pour celui-ci et est capturé là par la caméra pour former une image de contraste en utilisant le rayonnement capturé, après quoi l'image de contraste est traitée par une unité de traitement qui est prévue pour évaluer un motif dans l'image de contraste due à une variation de densité ou d'épaisseur d'un matériau du fruit à noyau correspondant à au moins une caractéristique prédéterminée du fruit à noyau et pour assigner, sur la base de l'évaluation de la caractéristique, le fruit à noyau à une classe prédéterminée, **caractérisé en ce que** la caractéristique correspond principalement à la présence ou l'absence d'une fente dans un noyau du fruit à noyau.

2. Procédé selon la revendication 1, **caractérisé en ce que** le fruit à noyau est au moins un des suivants : pêche, prune, abricot.

3. Procédé selon l'une quelconque des revendications précédentes, **caractérisé en ce que** le fruit à noyau a une orientation prédéterminée par rapport à la source de rayonnement à haute énergie et / ou en ce que l'orientation du fruit à noyau par rapport à la source de rayonnement à haute énergie est déterminée.

4. Procédé selon la revendication 3, **caractérisé en ce que** l'orientation est déterminée à partir de l'image de contraste par l'unité de traitement.

5. Dispositif agencé de manière à mettre en oeuvre le procédé selon l'une quelconque des revendications 1 - 4.
